# EUROPÄISCHE PATENTANMELDUNG

(11) **EP 0 653 450 A1**
(43) Veröffentlichungstag der Anmeldung: **17.05.1995**
(21) Anmeldenummer: 94117165.4
(22) Anmeldetag: 31.10.1994
(51) Int. Cl.: C08G 14/08, C09K 3/10, C08G 8/08

(54) **Schadstoffarme Resole für Kitte**

(30) Priorität: 13.11.1993 DE 4338835
(71) Anmelder: HOECHST AKTIENGESELLSCHAFT, D-65926 Frankfurt am Main (DE)
(72) Erfinder: Hesse, Wolfgang, Dr., D-65232 Taunusstein (DE); Rauhut, Klaus, Dr., D-62207 Wiesbaden (DE)

(57) **Zusammenfassung**

Resole, die als Bindemittel für Kitte, Laminate, Imprägnierungen und Schleifmittel mit niedriger Nachschwindung geeignet sind, mit einem Gehalt an freiem Phenol von weniger als 5 Gew.-% in Form von Mischkondensaten aus von gegenüber Formaldehyd trifunktionellen Phenolen und Alkylidenpolyphenolen in einem Molverhältnis der phenolischen Hydroxylgruppen in den trifunktionellen Phenolen zu den Hydroxylgruppen in den Alkylidenpolyphenolen von 9 : 1 bis 3 : 7 mit Formaldehyd in einem Molverhältnis der Summe der phenolischen Hydroxylgruppen zu Formaldehyd von 1 : 1,2 bis 1 : 2,0.

## Beschreibung

Die Erfindung bezieht sich auf schadstoffarme Resole, die bei guter Lösemittelbeständigkeit und niedrigem Phenolgehalt in Kitten mit geringer Nachschwindung einsetzbar sind, die Herstellung derartiger Resole sowie deren Verwendung für Kitte, Laminate, Imprägnierungen und Schleifmittel.

Aus EP-A 0 158 871 sind Resole für Kitte mit niedriger Nachschwindung bekannt. Aus diesen Resolen hergestellte Kittlösungen weisen aber einen Phenolgehalt zwischen 7 und 10 Gew.-% auf.

Der Gehalt an freien Phenolen in den bekannten Resol-haltigen Harzlösungen vermittelt wertvolle anwendungstechnische Eigenschaften. Bei Kitten beeinflußt er insbesondere die Nachschwindung. Andererseits unterliegt der Phenolgehalt von Zubereitungen der gesetzlichen Reglementierung. Zubereitungen mit einem Phenolgehalt oberhalb von 5 Gew.-% müssen als "giftig" gekennzeichnet werden, sind also wie Gewerbegifte zu behandeln. Aus arbeitshygienischen Gründen ist es daher wichtig, den maximalen Phenolgehalt in dieser Zubereitung auf Werte unterhalb der Giftigkeitsgrenze von 5 Gew.-% zu limitieren.

Bekanntermaßen hängt der Gehalt an freiem Phenol in einem Resol ganz wesentlich vom Formaldehyd-Einstand im Verhältnis zum Phenolanteil bei der Herstellung ab. Daher besteht eine Möglichkeit, Resole mit einem Phenolgehalt unter 5 Gew.-% zu erhalten darin, den Formaldehyd-Einstand zu erhöhen. Werden Resole mit unterschiedlichem Formaldehyd-Einstand und einem daraus resultierenden unterschiedlichen Gehalt an freiem Phenol synthetisiert, zeigt sich jedoch, daß die daraus hergestellten Kitte nur dann genügend niedrige Nachschwindungswerte haben, wenn der Phenolgehalt deutlich über 5 Gew.-% liegt (Vergleichversuche 2.1-2.4).

In US-A 3 979 218 wird ein Verfahren zur Herstellung von schadstoffarmen Resolen für Kittlösungen beschrieben. Dazu werden Phenole, alkylierte Phenole und Formaldehyd umgesetzt und deren phenolische Hydroxylgruppen anschließend partiell verethert. Aus derartigen Resolen hergestellte Kittlösungen besitzen einen niedrigen Phenolgehalt von teilweise sogar weniger als 1 Gew.-%. Aufgrund der eingebauten Alkylethergruppen sind die Härtungsprodukte naturgemäß jedoch anfällig gegenüber organischen Lösemitteln wie Toluol und Butylacetat und erreichen daher nicht die Chemikalienbeständigkeit der nicht veretherten Produkte.

Die Aufgabe der vorliegenden Erfindung bestand also darin, lösungsmittelbeständige Resole mit einem Gehalt an freiem Phenol von weniger als 5 Gew.-% bereitzustellen, die zur Herstellung von Kitten mit niedriger Nachschwindung geeignet sind.

Gelöst wird die Aufgabe erfindungsgemäß durch Resole, die aus einer Mischkondensation von Formaldehyd, gegenüber Formaldehyd trifunktionellen Phenolen und Alkylidenpolyphenolen in einem Molverhältnis der phenolischen Hydroxylgruppen in den trifunktionellen Phenolen zu denen in den Alkylidenpolyphenolen von 9 : 1 bis 3 : 7 und einem Molverhältnis der Summe der phenolischen Hydroxylgruppen zu Formaldehyd von 1 : 1,2 bis 1 : 2 erhalten werden.

Gegenstand der vorliegenden Erfindung sind daher Resole, die als Bindemittel für Kitte, Laminate, Imprägnierungen und Schleifmittel mit niedriger Nachschwindung geeignet sind, mit einem Gehalt an freiem Phenol von weniger als 5 Gew.-%, vorzugsweise weniger als 4 Gew.-%, insbesondere weniger als 3 Gew.-%, in Form von Mischkondensaten aus von gegenüber Formaldehyd trifunktionellen Phenolen und Alkylidenpolyphenolen in einem Molverhältnis der phenolischen Hydroxylgruppen in den trifunktionellen Phenolen zu den Hydroxylgruppen in den Alkylidenpolyphenolen von 9 : 1 bis 3 : 7, vorzugsweise 7 : 1 bis 3 : 5, insbesondere 5 : 1 bis 2 : 3, mit Formaldehyd in einem Molverhältnis der Summe der phenolischen Hydroxylgruppen zu Formaldehyd von 1 : 1,2 bis 1 : 2,0, vorzugsweise von 1 : 1 bis 1 : 1,8.

Unter gegenüber Formaldehyd trifunktionellen Phenolen sind Phenole zu verstehen, in denen beide o-Stellungen und die p-Stellung zur phenolischen Hydroxylgruppe unsubstituiert und reaktiv sind.

Als gegenüber Formaldehyd trifunktionelles Phenol eignet sich am besten Phenol selbst. Es ist aber auch möglich, Alkylphenole, beispielsweise m-Kresol, m-Ethylphenol, zu verwenden. Die trifunktionellen Phenole können einzeln oder auch im Gemisch eingesetzt werden.

Zusätzlich zu diesen trifunktionellen Phenolen können geringe Mengen vorzugsweise bis zu 10 mol-%, insbesondere bis zu 5 mol-%, bezogen auf die Menge an trifunktionellen Phenolen, an anderen substituierten gegenüber Formaldehyd bi- oder monofunktionellen Phenolen, beispielsweise o-, p-Kresol, mitverwendet werden.

Alkylidenpolyphenole sind Verbindungen, in denen mindestens zwei durch einen Alkylidenrest verbrückte Phenolreste vorliegen. Als Alkylidenpolyphenole dienen beispielsweise Novolake aus Phenol und Oxoverbindungen. Das Zahlenmittel der Molekularmassen dieser Novolake liegt vorzugsweise zwischen 200 und 1000, insbesondere zwischen 400 und 750. Neben dem zur Novolakherstellung verwendeten Phenol können auch geringe Mengen an substituierten Phenolen enthalten sein. Als geeignete Oxoverbindung kommen bei der Novolakherstellung beispielsweise Acetaldehyd, Propionaldehyd, Butyraldehyd, iso-Butyraldehyd oder höhere Aldehyde mit bis zu 10 Kohlenstoffatomen, vorzugsweise jedoch Formaldehyd in Frage. Es können auch Gemische von Novolaken aus unterschiedlichen Oxoverbindungen verwendet werden.

Als Alkylidenpolyphenole sind auch durch Methylen-, Ethyliden-, Propyliden-, iso-Propyliden-, Butyliden- oder iso-Butylidenbrücken verknüpfte Bisphenole oder deren Gemische einsetzbar. Diese Alkylidenbisphenole können auch Alkylsubstituenten vorzugsweise mit 1 bis 4 Kohlenstoffatomen tragen. Besonders bevorzugt ist die Verwendung des durch eine iso-Propylidenbrücke verknüpften Bisphenols 2,2-Diphenylolpropan.

Die erfindungsgemäßen Resole können zur Bindung überschüssigen Formaldehyds Formaldehydfänger in Mengen bis zu 10 Gew.-%, vorzugsweise bis zu 5 Gew.-%, enthalten. Dazu eignen sich prinzipiell alle Substanzen, die mit Formaldehyd spontan reagieren, beispielsweise Dicyandiamid, Melamin, Harnstoff, Ethylenharnstoff und andere cyclische Harnstoffderivate, Guanidin, Benzoguanamine und andere Aminoplastbildner.

Ein weiterer Gegenstand der vorliegenden Erfindung ist ein Verfahren zur Herstellung der erfindungsgemäßen Resole. Die Herstellung der Resole erfolgt in homogener Phase unter in der Phenolharz-Technologie üblichen Bedingungen zwischen 20 und 100 °C, vorzugsweise 40 und 80 °C.

Vorzugsweise werden der Reaktionsmischung basische Katalysatoren, beispielsweise Amine, Erdalkalioxide, Erdalkalihydroxide oder Alkalihydroxide, insbesondere Natriumhydroxid, zugesetzt. Vorzugsweise werden die Katalysatoren nach Beendigung der Reaktion durch Zugabe von Säure neutralisiert.

Wesentlich für das erfindungsgemäße Verfahren ist der Zeitpunkt der Zugabe des Alkylidenpolyphenols. Eine vorzeitige Zugabe führt zu Harzen mit sehr hohem Phenolgehalt (Vergleichsbeispiel 3). Das Alkylidenpolyphenol darf aber auch nicht zu spät zugegeben werden, da sonst die Viskosität, die Wasserverträglichkeit und andere wichtige anwendungstechnische Eigenschaften nachteilhaft beeinflußt werden. Daher ist es erforderlich, den Verlauf der Umsetzung durch Messung der Viskosität und des Gehalts an Formaldehyd genau zu kontrollieren. Eine optimale Reaktionsführung besteht darin, daß man zunächst die trifunktionellen Phenole und gegebenenfalls die mono- und bifunktionellen Phenole zusammen mit der Gesamtmenge des Formaldehyds und dem Katalysator vorlegt und abreagieren läßt, bis 50 bis 90 %, vorzugsweise 60 bis 90 %, des eingesetzten Formaldehyds umgesetzt sind. Anschließend werden die Alkylidenpolyphenole zugegeben und die Reaktion bis zum gewünschten Endpunkt, der in der Regel durch Viskositätsmessungen bestimmt wird, fortgesetzt.

Zur Reduktion des Gehalts an Formaldehyd im Resol kann nach Beendigung der Umsetzung ein Formaldehydfänger zugesetzt werden.

Ein weiterer Gegenstand der Erfindung ist die Verwendung der erfindungsgemäßen Resole als Bindemittel für Kittharze, Laminierharze und Imprägnierharze für poröse Formkörper oder auch als Bindemittel für blattförmige Schleifmittel.

Insbesondere bei der Herstellung von Kitten werden den Resolen im allgemeinen geeignete Füllstoffe, vorzugsweise Graphitmehl, Koksmehl, zugemischt. Auf weitere sonst in Kitten übliche Zusätze wie Epoxidverbindungen, Chloralkane und Furanderivate kann bei den erfindungsgemäßen Resolen verzichten werden. Bei Bedarf können die genannten Zusätze jedoch auch mitverwendet werden. Den erfindungsgemäßen Resolen können auch noch organische Lösemittel zugesetzt werden. Dabei sind solche bevorzugt, die nicht toxisch sind, beispielsweise Aceton.

Die Aushärtung der Resole wird bei der Anwendung der erfindungsgemäßen Resole für Imprägnierungen und Schleifmittel vorzugsweise durch Erhitzen bewirkt. Um eine gute Aushärtung der Resole in Kitten und Laminaten, insbesondere bei Anwendung bei tiefen Temperaturen zu erzielen, ist es im allgemeinen notwendig, als Katalysatoren starke anorganische oder organische Säuren wie Sulfonsäuren zuzusetzen. Es können auch vorteilhaft Sulfochloride als latente Säuren verwendet oder mitverwendet werden. Eine detaillierte Beschreibung der Zubereitung von Kitten sowie Methoden zu deren Ausprüfung sind in den eingangs angeführten Druckschriften EP-A 0 158 871 und US-A 3 977 218 beschrieben.

Die aus erfindungsgemäßen Resolharzen erhaltenen Kitte weisen alle erforderlichen Eigenschaften konventioneller Kitte auf und besitzen darüber hinaus erfindungsgemäß den Vorteil des niedrigen Phenolgehalts und zudem eine gute Chemikalienbeständigkeit.

Durch die nachfolgenden Beispiele wird die Erfindung näher erläutert. Teile und Prozente beziehen sich auf das Gewicht, soweit nicht anders vermerkt.

### Beispiel 1

Das gläserne Reaktionsgefäß ist mit Rührer, Thermometer, Heizung und Kühlung ausgestattet.

282 Teile Phenol werden aufgeschmolzen und mit 30,3 Teilen Natronlauge (33%ig) versetzt und die Mischung auf 60°C erwärmt. Dann werden innerhalb einer Stunde zunächst 121,5 Teile einer wäßrigen 37%igen Formaldehydlösung sowie 173,3 Teile Paraformaldehyd (91%ig) zugegeben und die Mischung bei 60°C gerührt, bis zwei Stunden nach Beendigung der Zugabe des Formaldehyds ein Formaldehydgehalt von 7,12 % in dem Reaktionsansatz vorliegt, entsprechend einem Formaldehydverbrauch von 72 %. Zu diesem Zeitpunkt weist die Reaktionslösung eine Viskosität von 137 mPa·s (23°C), einen Verdampfungsrückstand (1 h / 135°C) von 71 % und eine unbegrenzte Wasserverträglichkeit auf. Nun werden zum Ansatz 228 Teile 2,2-Diphenylolpropan zugegeben und gerührt, bis nach 150 Minuten eine Viskosität von 160 mPa·s (23°C) erreicht ist. Zu diesem Zeitpunkt enthält das Reaktionsgemisch 1,7 % an nicht umgesetztem Formaldehyd, einen Verdampfungsrückstand von 79,6 % (1 h /135°C) und eine Wasserverträglichkeit von 1 : 1,6 (23°C) sowie 3,8 % freies Phenol. Unter Berücksichtigung der gezogenen Proben entspricht die Ausbeute der eingesetzten Substanz.

### Beispiel 2

In der Apparatur des Beispiels 1 werden 329 Teile Phenol aufgeschmolzen, mit 60,5 Teilen Natronlauge (33%ig) versetzt und bei 60°C 121,5 Teile einer wäßrigen Formaldehydlösung (37%ig) sowie 231 Teile Paraformaldehyd (91%ig) zugegeben. Drei Stunden nach Beendigung der Zugabe des Formaldehyds sind bei einem Formaldehydgehalt von 3,4 % 90 % des eingesetzten Formaldehyds verbraucht. Die Reaktionsmischung hat eine Viskosität von 344 mPa·s bei einem Verdampfungsrückstand von 71,3 % (1 h / 135°C) und ist in jedem Verhältnis mit Wasser mischbar. Es werden nun 171 Teile 2,2-Diphenylolpropan zugegeben und bei 60°C weitergerührt, bis nach einer Reaktionszeit von 80 Minuten eine Viskosität von 1135 mPa·s (23°C) erreicht ist. Zu diesem Zeitpunkt besitzt das Harz einen Formaldehydgehalt von 1,7 %, einen Verdampfungsrückstand von 75,1 % (1 h / 135°C) und ist im Verhältnis 1 : 1,95 mit Wasser verträglich. Der Gehalt an nicht umgesetztem Phenol beträgt 1,7 %. Der Ansatz wird weiter reagieren lassen, bis bei 60°C nach einer weiteren Stunde eine Viskosität von 1600 mPa·s (23°C) erreicht ist. Der Gehalt an freiem Formaldehyd sinkt dabei auf 1,3 % ab und die Wasserverträglichkeit bleibt mit 1 : 2 praktisch unverändert. Der Gehalt an freiem Phenol beträgt 1,6 %. Auf 300 Teile des Harzes werden nun 10 Teile Harnstoff zugegeben und der Ansatz eine weitere Stunde bei 60°C gerührt und dann abgekühlt. Bei unverändertem Phenolgehalt von 1,6 % beträgt der Gehalt an nicht umgesetztem Formaldehyd 0,4 %, die Viskosität beträgt 1820 mPa·s und die Wasserverträglichkeit liegt bei 1 : 2,1.

### Beispiel 3

In der Apparatur gemäß Beispiel 1 werden 30,34 Teile Phenol, 3,25 Teile Natronlauge (33%ig), 23,97 Teile wäßrige Formaldehydlösung (37%ig) und 13,79 Teile Paraformaldehyd (91%ig) bei 60°C umgesetzt, bis nach 3 Stunden ein Formaldehydgehalt von 4,2 % erreicht ist. Dann werden 24,53 Teile 2,2-Diphenylolpropan zugegeben und bei 60°C weiter kondensiert, bis nach 7 Stunden eine Viskosität von 800 mPa·s (23°C) erreicht sind. Dann werden 4,6 Teile Harnstoff zugegeben, der Ansatz eine weitere Stunde bei 60°C gehalten, abgekühlt und entleert. Das Harz hat eine Viskosität von 750 mPa·s (23°C) einen Verdampfungsrückstand von 70,5 % (1h / 135°C), einen Phenolgehalt von 2,8 %, eine Wasserverträglichkeit bei 23°C von 1 : 0,9 und einen Formaldehydgehalt von 0,27%.

Dieses Harz wird kittechnisch geprüft. Dazu werden 70 Teile der Harzlösung mit einem Härtermehl, einer Zubereitung aus 50 Teilen Graphitmehl, 44 Teilen Koksmehl und 6 Teilen Benzolsulfochlorid gemischt. Die maximale Verarbeitungszeit der Mischung beträgt 75 Minuten bei Raumtemperatur. Dann erhärtet die Mischung zu einem festen Kitt-Körper. Nach 24 Stunden beträgt die Oberflächenhärte (Shore D) 55 Einheiten, nach 48 Stunden 65 Einheiten. Nach einer Lagerung von 8 Tagen bei einer Raumtemperatur beträgt der Elastizitätsmodul der gehärteten Kittmasse 0,715·10⁻⁴ N·mm⁻².

Die Nachschwindung des Kittes wird wie folgt gemessen:
- **Prüfkörper:**: Zylinder mit einem Durchmesser von 2,5 cm und einer Länge von 9,5 cm.

An beiden Enden werden Meßmarken aus Glas angebracht. Gesamtlänge des Prüfkörpers einschließlich Meßmarken: ca. 10,5 cm.

**Herstellung der Prüfkörper:** Einfüllen des Kittes in eine Form aus Polyethylen, Entnahme des erhärteten Kittzylinders nach 24 h.

**Messung:** Die erste Messung (Bezugsmessung) erfolgt unmittelbar nach der Entnahme des Prüfkörpers aus der Form nach Anbringen der Meßmarken mittels einer Mikrometerschraube. Die Zahlenangaben sind das Maß für den Linearschwund, ausgedrückt in Prozent, bezogen auf die Ausgangslänge der Prüfkörper bei Raumtemperatur.

Die Nachschwindung des gehärteten Kittes beträgt:

| Zeit | Linearschwund |
|---|---|
| 8d | 0,1368 % |
| 14d | 0,1578 % |
| 21d | 0,1824 % |
| 28d | 0,2070 % |
| 50d | 0,2140 % |

### Prüfung der Beständigkeit des Kittes

Die Beständigkeitsprüfung erfolgt nach dem Richtlinienblatt "Chemische Beständigkeit von Beschichtungs-, Verlege- und Verfugemassen" der DECHEMA.
- **Prüfkörper:**: Zylinder mit einem Durchmesser von 2,5 cm und einer Länge von 2,5 cm.

**Herstellung der Prüfkörper:** Einfüllen des Kittes in eine Form aus Polyethylen, Entnahme der erhärteten Kittzylinder nach 24 h.

### Beständigkeitsprüfung

Die Beständigkeitsprüfung erfolgt nach 8 Tagen Lagerung der Prüfkörper bei Raumtemperatur, durch Einlegen in die betreffende Prüfflüssigkeit bei Raumtemperatur. Nach einer Zeit von 1000 h werden die Prüfkörper aus der Prüfflüssigkeit entnommen. Danach erfolgt die Beurteilung nach folgenden Kriterien:
- Gewichtsveränderung in Prozent, bezogen auf das Gewicht vor der Einlagerung
- Augenschein anhand von Oberflächenglanz, Farbe, Rissbildung, Quellung
- Oberflächenhärte in Shore D im Vergleich zum Ausgangswert vor der Einlagerung
- Druckfestigkeit im Vergleich zum Ausgangswert vor der Einlagerung

**Bewertung:** Für die Bewertung des Kittes als beständig gelten folgende Kriterien:
· Oberfläche unverändert
· Gewichtsveränderung bis max. 2 %
· Abnahme der Druckfestigkeit bis max. 10 %

Die erfindungsgemäßen Kitte sind beständig gegen Chloroform, 20%ige Essigsäure, 20%ige Salzsäure, 20%ige Schwefelsäure, Toluol und destilliertes Wasser. Die Prüfkörper sind bedingt beständig gegen Butylacetat und 70%ige Schwefelsäure. Die Prüfkörper sind nicht beständig gegen Aceton, Bleichlauge, 15%ige Natronlauge und 15%ige Salpetersäure. Die Beständigkeiten entsprechen denen konventioneller Phenolharzkitte.

### Vergleichsversuch 1

Kittechnische Prüfung eines konventionellen Phenolharzkittes.

Eine konventionelle Phenolharz-Kittlösung ®Aspilt CN (Fa. Hoechst AG) mit einem Gehalt an freiem Phenol von 8,2 %, einem Gehalt an freiem Formaldehyd von 0,4% und einer Viskosität von 830 mPa·s bei einem Verdampfungsrückstand von 72% (1h / 135°C) wird mit dem in Beispiel 3 beschriebenen Kittmehl in gleicher Weise zu Kittkörpern verarbeitet. Die Prüfung der Nachschwindung ergibt folgende Werte:

| Zeit | Linearschwund |
|---|---|
| 8d | 0,1754 % |
| 14d | 0,1894 % |
| 21d | 0,2070 % |
| 28d | 0,2140 % |
| 50d | 0,2210 % |

Die Prüfung der chemischen Beständigkeit ergibt die gleichen Werte wie im Beispiel 3.

### Vergleichsversuche 2.1-2.4

Um den Einfluß des Molverhältnisses von Phenol zu Formaldehyd und des sich dabei einstellenden Gehaltes an nicht umgesetztem Phenol und Formaldehyd auf die Nachschwindung kennenzulernen, werden konventionelle Resole hergestellt und kittechnisch geprüft. Zur Herstellung der Resole wird wie folgt vorgegangen:
In der Apparatur aus Beispiel 1 werden 940 Teile Phenol aufgeschmolzen, 60,5 Teile Natronlauge (33%ig) zugegeben und bei 70°C mit wäßrigem Formaldehyd und Paraformaldehyd umgesetzt, bis eine Viskosität von 800 mPa·s (23°C) erreicht ist. Die Einstände an wäßrigem Formaldehyd, Paraformaldehyd, sowie die erhaltenen Eigenschaften und Kennzahlen zeigt die nachstehende Tabelle:

| Versuch | 2.1 | 2.2 | 2.3 | 2.4 |
|---|---|---|---|---|
| Molverhältnis Phenol : Formaldhyd | 1:2,2 | 1:2,0 | 1:1,8 | 1:1,6 |
| Menge Formaldehyd (37%) | 270 g | 270 g | 270 g | 270 g |
| Menge Paraformaldehyd (91%) | 616 g | 550 g | 486 g | 412 g |
| Viskosität [mPa·s (23°C)] | 780 | 840 | 800 | 780 |
| Verdampfungsrückstand (1h/135°C) | 72,2 % | 74,3 % | 74,4 % | 73,9 % |
| H₂O-Verträglichkeit (23°C) | 1:1,6 | 1:1,2 | 1:0,9 | 1:0,6 |
| Restgehalt CH₂O | 4,03 % | 3,0 % | 1,45 % | 1.25 % |
| Restgehalt Phenol | 4,6 % | 5,8 % | 7,7 % | 9,75 % |

Bei der kittechnischen Prüfung ergibt sich, daß die chemische Beständigkeit der Kitte vergleichbar ist zu der im Beispiel 3 und im Vergleichsversuch 1 angeführten. Bei der Messung der Nachschwindung ergeben sich folgende Werte:

| Linearschwund | | | | |
|---|---|---|---|---|
| Zeit/Versuch | 2.1 | 2.2 | 2.3 | 2.4 |
| 8d | 0,1817% | 0,1800% | 0,1754% | 0,1447% |
| 14d | 0,2278% | 0,2103% | 0,1894% | 0,1052% |
| 21d | 0,2524% | 0,2424% | 0,2070% | 0,1298% |
| 28d | 0,3105% | 0,2929% | 0,2140% | 0,1538% |
| 50d | 0,3807% | 0,3456% | 0,2210% | 0,1859% |

### Vergleichsversuch 3

In der Apparatur aus Beispiel 1 werden 30,34 Teile Phenol und 24,53 Teile 2,2-Diphenylolpropan aufgeschmolzen, mit 3,25 Teilen Natronlauge versetzt und wie im Beispiel 3 mit 23,97 Teilen wäßriger Formaldehydlösung (37%ig) und 13,97 Teilen Paraformaldehyd (91%ig) umgesetzt. Nach Zugabe des Formaldehyds wird zunächst 3 Stunden bei 60°C bis zu einer Viskosität von 207 mPa·s umgesetzt. Weil die Reaktion bei dieser Temperatur zu langsam abläuft, wird die Kondensation bei nunmehr 70°C 6 Stunden bis zu einer Viskosität von 850 mPa·s gefahren und dann abgebrochen. Der Formaldehydgehalt beträgt 1,13 % und die Wasserverträglichkeit bei 23°C 1 : 1,7 %. Der Gehalt an freiem Phenol beträgt 11,3 %.

## Patentansprüche

1. Resole für Kitte, Laminate, Imprägnierungen und Schleifmittel mit niedriger Nachschwindung mit einem Gehalt an freiem Phenol von weniger als 5 Gew.-% in Form von Mischkondensaten aus von gegenüber Formaldehyd trifunktionellen Phenolen und Alkylidenpolyphenolen in einem Molverhältnis der phenolischen Hydroxylgruppen in den trifunktionellen Phenolen zu den Hydroxylgruppen in den Alkylidenpolyphenolen von 9 : 1 bis 3 : 7 mit Formaldehyd in einem Molverhältnis der Summe der phenolischen Hydroxylgruppen zu Formaldehyd von 1 : 1,2 bis 1 : 2,0.

2. Resole nach Anspruch 1, dadurch gekennzeichnet, daß das trifunktionelle Phenol Phenol ist.

3. Resole nach Anspruch 1, dadurch gekennzeichnet, daß die Alkylidenpolyphenole Novolake aus Phenol und Formaldehyd sind, deren Zahlenmittel der Molekularmassen zwischen 200 und 1000 liegt.

4. Resole nach Anspruch 1, dadurch gekennzeichnet, daß die Alkylidenpolyphenole Bisphenole mit Methylen-, Ethyliden-, Propyliden-, iso-Propyliden-, Butyliden- oder iso-Butylidenbrücken sind.

5. Resole nach Anspruch 1, dadurch gekennzeichnet, daß die Resole Formaldehydfänger enthalten.

6. Verfahren zur Herstellung der Resole nach Anspruch 1 in Gegenwart von basischen Katalysatoren im Temperaturbereich von 20 bis 100°C, dadurch gekennzeichnet, daß in einer ersten Stufe die Gesamtmenge der trifunktionellen Phenole und des Formaldehyds eingesetzt werden und die Umsetzung bis zu einem Formaldehydverbrauch von 50 - 90 % des eingesetzten Formaldehyds fortgesetzt wird und dann die Alkylidenpolyphenole zugegeben werden und die Mischkondensation weitergeführt wird.

7. Verfahren nach Anspruch 6, dadurch gekennzeichnet, daß am Ende der Mischkondensation ein Formaldehydfänger zugegeben wird.

8. Verfahren nach Anpruch 6, dadurch gekennzeichnet, daß der Katalysator nach Beendigung der Reaktion neutralisiert oder teilneutralisiert wird.

9. Verwendung der Resole nach Anspruch 1 als Kittharz.

10. Verwendung der Resole nach Anspruch 1 als Laminierharz.

11. Verwendung der Resole nach Anspruch 1 als Imprägnierharz für poröse Formkörper.

12. Verwendung der Resole nach Anspruch 1 als Bindemittel für blattförmige Schleifmittel.
